# EUROPÄISCHE PATENTSCHRIFT

(11) **EP 1 109 868 B1**
(45) Veröffentlichungstag und Bekanntmachung des Hinweises auf die Patenterteilung: **02.05.2002**
(21) Anmeldenummer: 99968675.1
(22) Anmeldetag: 01.09.1999
(51) Int. Cl.: C09C 3/10, C08K 9/00, C09C 3/04

(54) **PRÄPARATIONSMITTEL**
PREPARATION AGENTS
AGENTS DE PREPARATION

(30) Priorität: 02.09.1998 DE 19839856
(43) Veröffentlichungstag der Anmeldung: 27.06.2001
(73) Patentinhaber: Sachtleben Chemie GmbH, 47198 Duisburg (DE)
(72) Erfinder: MEYERS, Franz, Charlotte, NC 28277 (US); KASTNER, Jürgen, D-44803 Bochum (DE); WEDLER, Michael, D-47199 Duisburg (DE); WEISER, Peter, D-47179 Duisburg (DE); WINKLER, Jochen, D-47441 Moers (DE); GRIEBLER, Wolf-Dieter, D-47441 Moers (DE)
(74) Vertreter: Uppena, Franz, Dr.
(86) Internationale Anmeldenummer: EP9906396
(87) Internationale Veröffentlichungsnummer: WO0014165

(56) Entgegenhaltungen:
- EP-A- 0 549 163
- WO-A-96/27638
- DE-A- 3 132 303
- DE-A- 3 839 865
- GB-A- 990 122
- PATENT ABSTRACTS OF JAPAN vol. 010, no. 023 (C-325), 29. Januar 1986 (1986-01-29) & JP 60 175530 A (NEOSU:KK), 9. September 1985 (1985-09-09)

## Beschreibung

Die Erfindung betrifft ein Verfahren zur Herstellung von Präparationsmitteln für die Weiterverarbeitung in synthetischen Polymeren, wobei die Präparationsmittel feinteilige, anorganische Festkörper, ausgewählt aus Pigmenten und/oder Füllstoffen, enthalten.

Präparationsmittel sind Stoffe oder Stoffgemische, die als funktionelle Additive in synthetische Polymere einarbeitbar sind; sie sollen als Füllstoffe und/oder Pigmente für verbesserte bzw. zusätzliche technische Eigenschaften im Vergleich zum ungefüllten Produkt sorgen und/oder pigmentspezifische Eigenschaften aufweisen, d.h. die Grenze zwischen Füllstoff und Pigment sind somit fließend.

Damit Füllstoffe und Pigmente, die in Form von Pulver vorliegen, als funktionelle Additive in synthetische Polymere einarbeitbar sind und ihre Wirkung vollständig entfalten können, bedürfen diese einer mit einem beachtlichen Aufwand verbundenen Vorbehandlung.
Diese Vorbehandlung umfaßt üblicherweise die Verfahrensschritte:
- Eintragen des Pigments und/oder Füllstoffs in ein flüssiges Medium
- Vordispergieren unter Anwendung schwacher Scherkräfte z.B. mittels Dissolver oder Rotor-Stator-Systemen
- Feindispergieren unter Anwendung starker Scherkräfte z.B. mit Rührwerksmühlen
- weitere Aufarbeitungsschritte, wie Zentrifugieren, Sedimentieren und/oder Filtrieren.

Insbesondere der energiereiche und damit kostenintensive Verfahrensschritt des Feindispergierens dient der Aufmahlung und homogenen Verteilung der i.a. in Form von Agglomeraten vorliegenden Ausgangsprodukte. Die mit einem solchen Aufwand vom Anwender vorbereitete Pigment- bzw. Füllstoff-Suspension kann dem eigentlichen Polymerherstellungsprozeß zugeführt werden.

Eine weitere Möglichkeit besteht darin, die Festkörper unmittelbar als Pulver oder in Form von Masterbatches dem Prozeß für die Herstellung der synthetischen Polymere zuzusetzen.

In beiden Fällen müssen die Festkörper in dem aufgeschmolzenen hochviskosen Polymer verteilt werden; dabei treten erhebliche Probleme bei der Dosierung auf, da die als stumpf zu bezeichnenden Festkörper ein gleichmäßiges Eintragen beträchtlich erschweren. Zudem liegt im Extrusionsschritt eine Polymerschmelze mit einer Viskosität von bis zu 500 Pas vor, in der keine ausreichend hohen Scherkräfte wirken, um feste Agglomerate zu zerteilen.

Es ist die Aufgabe der vorliegenden Erfindung, Präparationsmittel der eingangs beschriebenen Art für die Weiterverarbeitung in synthetischen Polymeren bereitzustellen, die sich in einfacher Weise und mit geringem Aufwand in diesen homogen dispergieren lassen.

Die Lösung dieser Aufgabe erfolgt durch ein Verfahren zur Herstellung von Präparationsmitteln für die Weiterverarbeitung in synthetischen Polymeren, bestehend aus feinteiligen anorganischen Festkörpern, ausgewählt aus Pigmenten und/oder Füllstoffen, die in einem Trägermaterial, ausgewählt aus wenigstens einer der organischen Substanzen Polyole, Polyglycole, Polyether, Dicarbonsäuren und deren Derivate, AH-Salz, Caprolactam, Paraffine, Phosphorsäureester, Hydroxycarbonsäureester und Cellulose feinverteilt eingebettet sind, wobei
in einer wässrigen Vormischung,
welche die organische Substanz in einer solchen Menge enthält, dass der Anteil der organischen Substanz 0,2 bis 50 Gew.-% (bezogen auf den anorganischen Festkörper-Gehalt des fertigen Produktes) beträgt,
20 bis 60 Gew.-% (bezogen auf den Gesamtansatz der wässrigen Vormischung) der anorganischen Festkörper dispergiert werden,
die Dispersion auf eine mittlere Korngröße d₅₀ von 0,1 bis 0,8 µm naßgemahlen wird,
der Überkornanteil von > 1 µm aus der Suspension entfernt wird und
die Suspension getrocknet wird.

Als Material für die Festkörper kommen insbesondere Titandioxid, Bariumsulfat, Calciumcarbonat, Lithopone, Siliciumdioxid, Alumosilikate, Zinksulfid, Aluminiumoxid, Kaoline, Talk, Dolomite und Calcite in Betracht.

Im Rahmen der vorzugsweisen Ausgestaltung der Erfindung beträgt der Gehalt an organischer Substanz 10 bis 30 Gew.-%, bezogen auf den anorganischen Festkörpergehalt des fertigen Produktes.

Da die mittlere Korngröße d₅₀ der anorganischen Festkörper 0,1 bis 0,8 µm beträgt, lassen sich mit diesen gute Eigenschaften bei der Mattierung, insbesondere von Synthesefasern, erzielen.

Um Oxidationserscheinungen an der organischen Substanz zu vermeiden, enthält diese noch bis zu 5 Gew.-%, vorzugsweise bis zu 2 Gew.-%, wenigstens eines der handelsüblichen Antioxidantien, wie Irganox 1010, Cibatex 4458, Irganox 1098 und Irganox B 1171. (Hersteller: Ciba Spezialitäten Chemie GmbH, Lampertheim)

Im Rahmen der weiteren Ausbildung der Erfindung besteht die organische Substanz aus Polyethylenglycol mit Molmassen von 1000 bis 3000. Diese Substanz weist eine gute Benetzbarkeit und gutes Einbettungsvermögen für die anorganischen Festkörper auf.

Das in einer Korngröße von 3 bis 100 µm vorliegende Präparationsmittel ist rieselfähig, gut dosierbar und leicht dispergierbar. Zudem sind die im Präparationsmittel enthaltenen Festkörper frei von Überkorn und zeigen keine Neigung zur Reflockulation. Das Präparationsmittel läßt sich mit relativ niedrigen Scherkräften in synthetischen Polymeren dispergieren.

Die Herstellung der Präparationsmittel erfolgt in der Weise, daß eine wäßrige 20 bis 60 Gew.-% Festkörper enthaltende Vormischung mit 0,2 bis 50 Gew.-% (bezogen auf den Festkörper-Gehalt) organischer Substanz dispergiert, die Dispersion auf eine mittlere Korngröße d₅₀ von 0,1 bis 0,8 µm naßgemahlen, der Korngrößenanteil von > 1 µm abgetrennt und danach die Dispersion getrocknet wird.

Im Rahmen der weiteren Ausgestaltung der Verfahrensmaßnahmen erfolgt die Naßmahlung in einer Rührwerkskugelmühle, die Abtrennung des Überkorns von > 1 µm durch Sedimentieren, Filtrieren oder Zentrifugieren und die Trocknung der Suspension durch Sprühtrocknen oder Mahltrocknen.

Die Erfindung ist nachstehend näher anhand mehrerer Ausführungsbeispiele erläutert:

### 1. Ausführungsbeispiel

In einem offenen Rührgefäß werden 8004 g vollentsalztes Wasser und 696 g Polyethylenglycol Typ 3000 (entspricht 12 % bezogen auf den Festkörpergehalt) vorgelegt und unter Rühren 5800 g (entspricht 40 % bezogen auf den Dispergieransatz) ungemahlenes TiO₂ portionsweise zugegeben. Nach der Vordispergierung dieser Mischung mittels eines Dissolvers erfolgt eine doppelte Perlmahlung mit einer kontinuierlich arbeitenden 1,4 I-Perlmühle bei einem Durchsatz von ca. 8 l/h. Anschließend wird die auf diese Weise hergestellte Suspension mit einem Elektro-Sprühturm getrocknet.

### 2. Ausführungsbeispiel

In einem offenen Rührgefäß werden 8515 g vollentsalztes Wasser und 585 g Polyethylenglycol Typ 2000, (entspricht 15 % bezogen auf den Festkörpergehalt) vorgelegt und unter Rühren 3900 g (entspricht 30 % bezogen auf den Dispergieransatz) feinteiliges Bariumsulfat portionsweise zugegeben. Nach Vordispergierung dieser Mischung mittels eines Dissolvers erfolgt eine Perlmahlung mit einer kontinuierlich arbeitenden 1,4 I-Perlmühle bei einem Durchsatz von ca. 8 l/h. Anschließend wird die hergestellte Suspension mit einem Elektro-Sprühturm sprühgetrocknet.

### 3. Ausführungsbeispiel

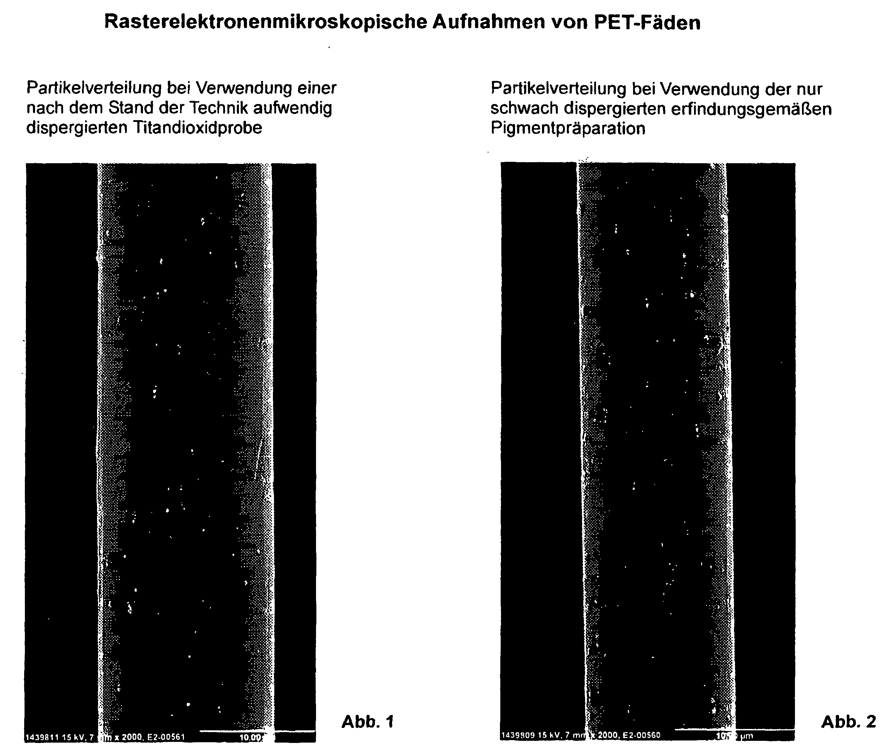

In einem Rührbehälter wird eine Mischung aus 37,5 Gew.-% Ethandiol (Spinnfaserqualität) und 62,5 % des nach dem 1. Ausführungsbeispiel hergestellten Präparationsmittels mittels eines der Behältergröße angepassten Dissolvers schwach dispergiert und anschließend dem Polyester-Herstellprozeß zwischen der Voresterungsstufe bzw. Umesterungsstufe und der Vorpolykondensationsstufe zugesetzt. Die aus dem Polyester hergestellten Polyesterfäden zeigen bei der angewandten geringen Dispergierenergie die gleiche Partikelverteilung im Polymer wie beim Einsatz einer nach dem Stand der Technik aufwendig dispergierten handelsüblichen TiO₂-Probe. Ein diesbezüglicher Vergleich von zwei rasterelektronenmikroskopischen Aufnahmen von PET-Fäden ist in der Zeichnung durch Abb.1 und Abb.2 dargestellt.

## Patentansprüche

1. Verfahren zur Herstellung von Präparationsmitteln für-die Weiterverarbeitung in synthetischen Polymeren, bestehend aus feinteiligen anorganischen Festkörpern, ausgewählt aus Pigmenten und/oder Füllstoffen, die in einem Trägermaterial, ausgewählt aus wenigstens einer der organischen Substanzen Polyole, Polyglycole, Polyether, Dicarbonsäuren und deren Derivate, AH-Salz, Caprolactam, Paraffine, Phosphorsäureester, Hydroxycarbonsäureester und Cellulose feinverteilt eingebettet sind, **dadurch gekennzeichnet, daß**
in einer wässrigen Vormischung,
welche die organische Substanz in einer solchen Menge enthält, dass der Anteil der organischen Substanz 0,2 bis 50 Gew.-% (bezogen auf den anorganischen Festkörper-Gehalt des fertigen Produktes) beträgt,
20 bis 60 Gew.-% (bezogen auf den Gesamtansatz der wässrigen Vormischung) der anorganischen Festkörper dispergiert werden,
die Dispersion auf eine mittlere Korngröße d₅₀ von 0,1 bis 0,8 µm naßgemahlen wird,
der Überkomanteil von > 1 µm aus der Suspension entfernt wird und
die Suspension getrocknet wird.

2. Verfahren nach Anspruch 1, **dadurch gekennzeichnet, daß** die anorganischen Festkörper aus Titandioxid, Bariumsulfat, Calciumcarbonat, Lithopone, Siliciumdioxid, Alumosilicaten, Zinksulfid, Aluminiumoxid, Kaolinen, Talk, Dolomiten und Calciten bestehen.

3. Verfahren nach Anspruch 2, **dadurch gekennzeichnet, daß** der Gehalt an organischer Substanz 10 bis 30 Gew.-% beträgt.

4. Verfahren nach einem der Ansprüche 1 bis 3, **dadurch gekennzeichnet, daß** die organische Substanz bis zu 5 Gew.-% eines Antioxidantiums enthält.

5. Verfahren nach Anspruch 4, **dadurch gekennzeichnet, daß** die organische Substanz bis zu 2 Gew.-% eines Antioxidantiums enthält.

6. Verfahren nach einem der Ansprüche 1 bis 5, **dadurch gekennzeichnet, daß** die organische Substanz aus einem Polyethylenglycol besteht.

7. Verfahren nach Anspruch 6, **dadurch gekennzeichnet, daß** das Polyethylenglycol eine Molmasse von 1000 bis 3000 hat.

8. Verfahren nach einem der Ansprüche 1 bis 7, **dadurch gekennzeichnet, daß** die Dispersion perlgemahlen wird.

9. Verfahren nach einem der Ansprüche 1 bis 8, **dadurch gekennzeichnet, daß** die Suspension sprüh- oder mahlgetrocknet wird.

10. Verfahren nach einem der Ansprüche 1 bis 9, **dadurch gekennzeichnet, daß** die Abtrennung des Überkorns durch Sedimentieren, Filtrieren oder Zentrifugieren erfolgt.

11. Verfahren nach einem der Ansprüche 1 bis 10, **dadurch gekennzeichnet, daß** die Präparationsmittel eine Korngröße von 3 bis 100 µm aufweisen.

12. Präparationsmittel, erhältlich durch ein Verfahren gemäß einem der Ansprüche 1 bis 11, wobei
in einer wässrigen Vormischung,
welche eine oder mehrere der organischen Substanzen Polyole, Polyglycole, Polyether, Dicarbonsäuren und deren Derivate, AH-Salz, Caprolactam, Paraffine, Phosphorsäureester, Hydroxycarbonsäureester und Cellulose in einer solchen Menge enthält, dass der Anteil der organischen Substanz 0,2 bis 50 Gew.-% (bezogen auf den anorganischen Festkörper-Gehalt des fertigen Produktes) beträgt,
20 bis 60 Gew.-% (bezogen auf den Gesamtansatz der wässrigen Vormischung) anorganischen Festkörper, ausgewählt aus Pigmenten und/oder Füllstoffen, dispergiert werden,
die Dispersion auf eine mittlere Korngröße d₅₀ von 0,1 bis 0,8 µm naßgemahlen wird,
der Überkomanteil von > 1 µm aus der Suspension entfernt wird und
die Suspension getrocknet wird.

## Claims

1. Method for producing preparations for further treatment in synthetic polymers, the preparations consisting of finely divided inorganic solids, selected from pigments and/or fillers which are embedded in a finely distributed form in a carrier material, selected from at least one of the organic substances polyols, polyglycols, polyethers, dicarboxylic acids and their derivatives, AH salt, caprolactam, paraffins, phosphoric esters, hydroxycarboxylic esters and cellulose, **characterised in that**
in an aqueous pre-mix,
which contains the organic substance in such a quantity that the proportion of the organic substance amounts to 0.2 to 50 % by weight (relative to the inorganic solids content of the finished product),
there are dispersed 20 to 60 % by weight (relative to the total composition of the aqueous pre-mix) of the inorganic solids,
the dispersion is wet-ground to an average particle size d₅₀ of 0.1 to 0.8 µm,
the oversize-particle portion of > 1 µm is removed from the suspension, and
the suspension is dried.

2. Method according to claim 1, **characterised in that** the inorganic solids consist of titanium dioxide, barium sulphate, calcium carbonate, lithopone, silicon dioxide, alumosilicates, zinc sulphide, aluminium oxide, kaolins, talc, dolomites and calcites.

3. Method according to claim 2, **characterised in that** the organic-substance content amounts to 10 to 30 % by weight.

4. Method according to one of claims 1 to 3, **characterised in that** the organic substance contains up to 5 % by weight of an antioxidant agent.

5. Method according to claim 4, **characterised in that** the organic substance contains up to 2 % by weight of an antioxidant agent.

6. Method according to one of claims 1 to 5, **characterised in that** the organic substance consists of a polyethylene glycol.

7. Method according to claim 6, **characterised in that** the polyethylene glycol has a molar mass of 1000 to 3000.

8. Method according to one of claims 1 to 7, **characterised in that** the dispersion is ground in a bead mill.

9. Method according to one of claims 1 to 8, **characterised in that** the suspension is spray-dried or dried by grinding.

10. Method according to one of claims 1 to 9, **characterised in that** the separation of the oversize particles is effected by sedimentation, filtration or centrifuging.

11. Method according to one of claims 1 to 10, **characterised in that** the preparations have a particle size of 3 to 100 µm.

12. Preparations, obtainable by means of a method in accordance with one of claims 1 to 11, wherein
in an aqueous pre-mix,
which contains one or more of the organic substances polyols, polyglycols, polyethers, dicarboxylic acids and their derivatives, AH salt, caprolactam, paraffins, phosphoric esters, hydroxycarboxylic esters and cellulose in such a quantity that the proportion of the organic substance amounts to 0.2 to 50 % by weight (relative to the inorganic solids content of the finished product),
there are dispersed 20 to 60 % by weight (relative to the total composition of the aqueous pre-mix) of inorganic solids, selected from pigments and/or fillers,
the dispersion is wet-ground to an average particle size d₅₀ of 0.1 to 0.8 µm,
the oversize particle-portion of > 1 µm is removed from the suspension, and
the suspension is dried.

## Revendications

1. Procédé de fabrication d'agents de préparation destinés à être incorporés dans des polymères synthétiques, constitués de fines particules solides minérales choisies parmi les pigments et/ou charges, incorporées sous forme finement dispersée dans un matériau support constitué d'au moins une substance organique choisie parmi les polyols, les polyglycols, les polyéthers, les acides dicarboxyliques et leurs dérivés, le sel de l'acide adipique et de la 1,6-hexaméthylènediamine (sel AH), le caprolactame, les paraffines, les esters d'acide phosphorique, les esters d'acides hydroxycarboxyliques et la cellulose, **caractérisé par le fait que** l'on disperse dans un prémélange aqueux contenant la substance organique en une telle quantité que la fraction de la substance organique (rapportée à la teneur en matières solides minérales du produit fini) soit comprise entre 0,2 et 50 % en poids, de 20 à 60 % en poids (rapporté au poids total du prémélange aqueux) desdites particules minérales, que l'on broie par voie humide la dispersion jusqu'à une taille moyenne de particules d₅₀ comprise entre 0,1 et 0,8 µm, que l'on élimine de la suspension la fraction de particules ayant une taille supérieure à 1 µm, et que l'on sèche la suspension.

2. Procédé selon la revendication 1, **caractérisé par le fait que** les particules solides minérales sont constituées de dioxyde de titane, de sulfate de baryum, de carbonate de calcium, de lithopone, de dioxyde de silicium, d'alumino-silicates, de sulfure de zinc, d'oxyde d'aluminium, de kaolins, de talc, de dolomites et de calcites.

3. Procédé selon la revendication 2, **caractérisé par le fait que** la fraction de la substance organique est comprise entre 10 et 30 % en poids.

4. Procédé selon l'une des revendications 1 à 3, **caractérisé par le fait que** la substance organique contient jusqu'à 5 % en poids d'un agent anti-oxydant.

5. Procédé selon la revendication 4, **caractérisé par le fait que** la substance organique contient jusqu'à 2 % en poids d'un agent anti-oxydant.

6. Procédé selon l'une des revendications 1 à 5, **caractérisé par le fait que** la substance organique est du polyéthylèneglycol.

7. Procédé selon la revendication 6, **caractérisé par le fait que** le polyéthylèneglycol a une masse molaire comprise entre 1000 et 3000.

8. Procédé selon l'une des revendications 1 à 7, **caractérisé par le fait que** la dispersion est broyée dans un broyeur à billes.

9. Procédé selon l'une des revendications 1 à 8, **caractérisé par le fait que** la suspension est séchée par pulvérisation ou par broyage.

10. Procédé selon l'une des revendications 1 à 9, **caractérisé par le fait que** la séparation des particules trop grandes se fait par sédimentation, filration ou centrifugation.

11. Procédé selon l'une des revendications 1 à 10, **caractérisé par le fait que** les agents de préparation ont une taille de particules comprise entre 3 et 100 µm.

12. Agents de préparation que l'on peut obtenir par un procédé selon l'une des revendications 1 à 11, dans lequel on disperse dans un prémélange aqueux contenant une ou plusieurs substances organiques choisies parmi les polyols, les polyglycols, les polyéthers, les acides dicarboxyliques et leurs dérivés, le sel de l'acide adipique et de la 1,6-hexaméthylènediamine (sel AH), le caprolactame, les paraffines, les esters d'acide phosphorique, les esters d'acides hydroxycarboxyliques et la cellulose, en une telle quantité que la fraction de la substance organique (rapportée à la teneur en matières solides minérales du produit fini) soit comprise entre 0,2 et 50 % en poids, de 20 à 60 % en poids (rapportés au poids total du prémélange aqueux) de particules solides minérales choisies parmi les pigments et/ou charges, que l'on broie la dispersion par voie humide jusqu'à une taille moyenne de particules d₅₀ comprise entre 0,1 et 0,8 µm, que l'on élimine de la suspension la fraction de particules ayant une taille supérieure à 1 µm, et que l'on sèche la suspension.
